# EUROPEAN PATENT SPECIFICATION

(11) **EP 2 754 882 B1**
(45) Date of publication and mention of the grant of the patent: **20.01.2016**
(21) Application number: 12830098.5
(22) Date of filing: 08.08.2012
(51) Int. Cl.: F02M 37/10, F02M 37/00, F16J 15/10, B62J 35/00, F16J 15/06

(54) **SEAL STRUCTURE FOR FUEL PUMP**
DICHTUNGSSTRUKTUR FÜR EINE KRAFTSTOFFPUMPE
STRUCTURE DE JOINT D'ÉTANCHÉITÉ POUR POMPE À CARBURANT

(30) Priority: 07.09.2011 JP 2011194753
(43) Date of publication of application: 16.07.2014
(73) Proprietor: Honda Motor Co., Ltd., Minato-ku Tokyo 107-8556 (JP)
(72) Inventor: UENO, Masaki, Wako-shi Saitama 351-0193 (JP); HORIUCHI, Tetsu, Wako-shi Saitama 351-0193 (JP); INAOKA, Hiroshi, Wako-shi Saitama 351-0193 (JP)
(74) Representative: Beder, Jens
(86) International application number: PCT/JP2012/070265
(87) International publication number: WO 2013/035483

(56) References cited:
- EP-A1- 1 801 470
- WO-A1-2009/044754
- JP-A- H08 232 792
- JP-A- 2005 233 315
- JP-B2- 4 589 686
- US-A1- 2009 242 300

## Description

### Technical Field

The present invention relates to a seal structure for a fuel pump in which a fuel pump insertion port is formed in a fuel tank for stocking fuel and an annular double seal is disposed between the fuel pump insertion port and a flange provided to the fuel pump.

### Background Art

Some seal structure between a fuel tank and a fuel pump is known to adopt an annular double seal in which an inner seal, an outer seal and a connecting portion for connecting both the seals are formed integrally with one another (see Patent Document 1, for example). An annular recess portion having a V-shaped cross-section is formed on the outer periphery of the outer seal of the double seal, and a recess portion which is wider in width and deeper in depth than the surrounding recess portion is formed on the outer periphery of the connecting portion. The structure as described above makes it easy to release air in the double seal through sagging of lip portions at the upper and lower sides of the recess portion, thereby enhancing sealing performance. **Prior Art Documents**

### Patent Document

Patent Document 1: Japanese Patent No. 4,589, 686

### Summary of the Invention

### Problem to be solved by the Invention

However, the conventional double seal is integrally formed, and the inner seal and the outer seal are formed of the same material. Therefore, the double seal must be formed of a material which covers both fuel such as gasoline or the like to be sealed by the inner seal and dust to be sealed by the outer seal, so that the cost of parts may rise up.

On the other hand, when the respective seals are configured as separate bodies so that the material of each of the inner seal and the outer seal can be individually set, it is required to individually mount each seal when the seals are assembled. However, when the respective seals are merely configured as separate bodies, these seals are not fixed to a pump by merely assembling each seal to the pump. Accordingly, much attention must be paid so that the seals do not drop off when assembled, and thus there remains a problem in assembling performance. Furthermore, the double seal is also required to be disposed compactly in order to reduce the size of a flat portion which is required to be set at the fuel tank side.

The present invention has been implemented in view of the foregoing situation, and has an object to provide a seal structure for a fuel pump in which an outer seal and an inner seal are configured as separate bodies, the assembling performance between both the seals can be made excellent and the installation area of the double seal can be made small.

### Means of solving the Problem

In order to solve the above problem, according to the present invention, a seal structure for a fuel pump in which a fuel pump insertion port (32A) is formed in a fuel tank (31) for stocking fuel, and an annular double seal (71) is disposed between the fuel pump insertion port (32A) and a flange (43) provided to the fuel pump (41) is characterized in that the double seal (71) has an outer seal (72) and an inner seal (82) which are configured as separate bodies , the outer seal (72) is provided with outer seal inward projecting portions (73) projecting inwards in a radial direction thereof, the inner seal (82) is provided with inner seal outward projecting portions (83) projecting outwards in the radial direction, any one of the fuel pump (41) and the fuel tank (31) is provided with positioning portions (48, 49) in which the outer seal inward projecting portions (73) and the inner seal outward projecting portions (83) are fitted, and the outer seal inward projecting portions (73) and the inner seal outward projecting portions (83) are alternately arranged along a peripheral direction of the seals and located within the same width in the radial direction.

According to this construction, the raw materials of the respective seals of the double seal can be easily and individually set, so that the cost of parts can be reduced by reducing the cost of the raw materials. Furthermore, the outer seal is provided with the outer seal inward projecting portions projecting inwards in the radial direction, and the inner seal is provided with inner seal outward projecting portions projecting outwards in the radial direction, any one of the fuel pump and the fuel tank is provided with the positioning portions in which the outer seal inward projecting portions and the inner seal outward projecting portions are fitted, and the respective projecting portions are alternately arranged along the peripheral direction of the seals and located within the same width in the radial direction. Therefore, even in the double seal structure in which the outer seal and the inner seal are configured as separate bodies, the respective seals can be excellently assembled, and the arrangement area of the double seal can be made small. When the arrangement area of the double seal can be made small, setting of the mating face between the fuel pump and the fuel tank can be made small, so that the degree of freedom of the arrangement of the fuel pump can be enhanced and the fuel pump can be easily arranged.

In the above construction, each of the positioning portions (48) in which the outer seal inward projecting portions (73) are fitted may radially penetrate through the annular projecting portion (45) which is erectly provided to the flange (43) between the outer seal (72) and the inner seal (82), and may comprise a narrow slit portion (48A) at the outside in the radial direction, and a wide slit portion (48B) which is located inside of the narrow slit portion (48A) in the radial direction and is wider than the narrow slit portion (48A). According to this construction, the outer seal inward projecting portions can be approached to the inner seal as closely as possible, so that the outer shape of the outer seal can be made small, and the size in the radial direction of the double seal can be made as small as possible.

Furthermore, in the above construction, each of the positioning portions (49) in which the inner seal outward projecting portions (83) are fitted may radially penetrate through the annular projecting portion (45) that is erectly provided to the flange (43) between the outer seal (72) and the inner seal (82), and comprise a narrow slit portion (49A) at the inside in the radial direction and a wide slit portion (49B) which is located outside of the narrow slit portion (49A) in the radial direction and is wider than the narrow slit portion (49A). According to this construction, the inner seal outward projecting portion can be approached to the outer seal as closely as possible, so that the outer shape of the inner seal can be made large, and the size in the radial direction of the double seal can be made as small as possible.

Furthermore, in the above construction, when the outer seal inward projecting portions (73) are fitted in the positioning portions (48), the base portions (73A) of the outer seal inward projecting portions (73) may be more pinched by the positioning portions (48) than tip portions (73B) thereof at the inside end in the radial direction, and when the inner seal outward projecting portions (83) are fitted in the positioning portions (49), the base portions (83A) of the inner seal outward projecting portions (83) may be more pinched by the positioning portions (49) than tip portions (83B) at the outside end in the radial direction. According to this construction, the tip portions of the respective projecting portions can be easily mounted and dismounted while the positional displacement of each seal is prevented by the base portions of the respective projecting portions, and thus the mounting and demounting work of each seal can be easily performed.

In the above construction, the raw material of the outer seal (72) may contain nitrile rubber or polyvinyl chloride, and the raw material of the inner seal (82) may contain fluoro-rubber. According to the above construction, the outer seal is enabled to efficiently function as a dust seal, and the inner seal is enabled to efficiently function as a fuel seal, so that the seals can function as optimum seals suitable for locations thereof.

In the above construction, the outer seal (72) may have an annular first recess portion (72C) having a V-shaped cross-section formed on the outer periphery thereof, and a second recess portion (72D) which is wider and deeper than the first recess portion (72C) and formed on the outer periphery thereof so as to confront each of the outer seal inward projecting portions (73). According to this construction, air between the seals of the double seal can be easily released, and such a deformation of the outer seal that the outer seal spreads in the radial direction of the second recess portion can be prevented by positioning of the outer seal inward projecting portions.

Furthermore, in the above construction, the positioning portion (48) in which the outer seal inward projecting portion (73) is fitted and the positioning portion (49) in which the inner outward projecting portion (83) is fitted may be formed to be different in width, and both the positioning portions (48, 49) and the respective projecting portions (73, 83) may be configured to be equal in length.

### Effect of the Invention

According to the present invention, in the seal structure for the fuel pump in which the fuel pump insertion port is formed in the fuel tank for stocking fuel, and the annular double seal is disposed between the fuel pump insertion port and the flange provided to the fuel pump, the double seal has the outer seal and the inner seal which are configured as separate bodies therefrom, the outer seal is provided with the outer seal inward projecting portions projecting inwards in the radial direction thereof, the inner seal is provided with the inner seal outward projecting portions projecting outwards in the radial direction, any one of the fuel pump and the fuel tank is provided with the positioning portions in which the outer seal inward projecting portions and the inner seal outward projecting portions are fitted, and the outer seal inward projecting portions and the inner seal outward projecting portions are alternately arranged along a peripheral direction of the seals and located within the same width in the radial direction. Therefore, in the double seal structure in which the outer seal and the inner seal are configured as separate bodies, the assembling performance of both the seals can be made excellent, and the arrangement area of the double seal can be made compact. Therefore, the flat portion to be set in the fuel tank can be made small.

Furthermore, the positioning portions in which the outer seal inward projecting portions are fitted radially penetrate through the annular projecting portion which is erectly provided to the flange between the outer seal and the inner seal, and are formed in the outer seal slits expanding inwards in the radial direction, whereby the outer seal inward projecting portions can be approached to the inner seal as closely as possible, so that the outer shape of the outer seal can be made small and the size in the radial direction of the double seal can be made as compact as possible.

Furthermore, the positioning portions in which the inner seal outward projecting portions are fitted radially penetrate through the annular projecting portion which is erectly provided to the flange between the outer seal and the inner seal, and are formed in the inner seal slits expanding outwards in the radial direction, whereby the inner seal outward projecting portions can be approached to the outer seal as closely as possible, so that the outer shape of the inner seal can be made large and the size in the radial direction of the double seal can be made as compact as possible.

When the outer seal inward projecting portions are fitted in the positioning portions, the base portions of the outer seal inward projecting portions are more pinched by the positioning portions than the tip portions at the inside end in the radial direction. When the inner seal outward projecting portions are fitted in the positioning portions, the base portions of the inner seal outward projecting portions are more pinched by the positioning portions than the tip portions at the outside end in the radial direction. In this case, the tip portions of the respective projecting portions can be easily mounted into and dismounted from the positioning portions while preventing the positional displacement of the respective seals by the base portions of the respective projecting portions, so that the mounting and demounting work of the respective seals can be easily performed.

The raw material of the outer seal contains nitrile rubber or polyvinyl chloride, and the raw material of the inner seal contains fluoro-rubber, whereby the outer seal can be made to efficiently function as dust seal and the inner seal can be made to efficiently function as fuel seal. Therefore, the seals can be made optimum seals suitable for locations.

Furthermore, the annular first recess portion having the V-shaped cross-section is formed on the outer periphery of the outer seal, and the second recess portion which is wider and deeper than the first recess portion is formed on the outer periphery of the outer seal so as to confront the outer seal inward projecting portion, whereby the air in the double seal can be made to be easily released, and such a deformation that the seal expands in the radial direction of the second recess portion can be prevented by the positioning portions of the outer inward projecting portions.

The positioning portion in which the outer seal inward projecting portion is fitted and the positioning portion in which the inner seal outward projecting portion is fitted are configured to be different in width, and both the positioning portions and the respective projecting portions are configured to be equal in length, whereby erroneous assembling of the respective projecting portions can be prevented.

### Brief Description of the Drawings

[Fig. 1] Fig. 1 is a diagram showing the structure of a front portion of a two-wheeled motor vehicle to which an embodiment of the present invention is applied.
[Fig. 2] Fig. 2 is a side cross-sectional view showing a fixing state of a fuel pump.
[Fig. 3] Fig. 3 is a diagram of the fixing stage of the fuel pump which is taken from the lower side.
[Fig. 4] Fig. 4 is an exploded perspective view showing a fixing structure of the fuel pump.
[Fig. 5] Fig. 5 is a perspective view showing the state that a double seal is mounted to a flange of the fuel pump.
[Fig. 6] Fig. 6(A) is a plan view of the flange, and Fig. 6(B) is a cross-sectional view of b-b of Fig. 6(A).
[Fig. 7] Fig. 7 (A) is a top view of a first slit, and Fig. 7(B) is a top view of a second view.
[Fig. 8] Fig. 8 (A) is a plan view of an outer seal, Fig. 8(B) is a cross-sectional view of b-b, Fig. 8(C) is a view taken from the direction of an arrow c, Fig. 8(D) is a cross-sectional view of d-d of Fig. 8(C), and Fig. 8(E) is a cross-sectional view of e-e of Fig. 8(C).
[Fig. 9] Fig. 9 (A) is a plan view of an inner seal, Fig. 9(B) is a plan view showing an outward projecting portion of the inner seal, and Fig. 9(C) is a cross-sectional view of c-c of Fig. 9 (B) .

### Mode for carrying out the Invention

An embodiment of the present invention will be described hereunder with reference to the drawings. In the following description, the front-and-rear, right-and-left and up-and-down directions are the same as the directions based on the body of the vehicle unless otherwise particularly described. Furthermore, reference character FR shown in the respective figures represents the front side of the vehicle body, reference character UP represents the upper side of the vehicle body, and reference character L represents the left side of the vehicle body.

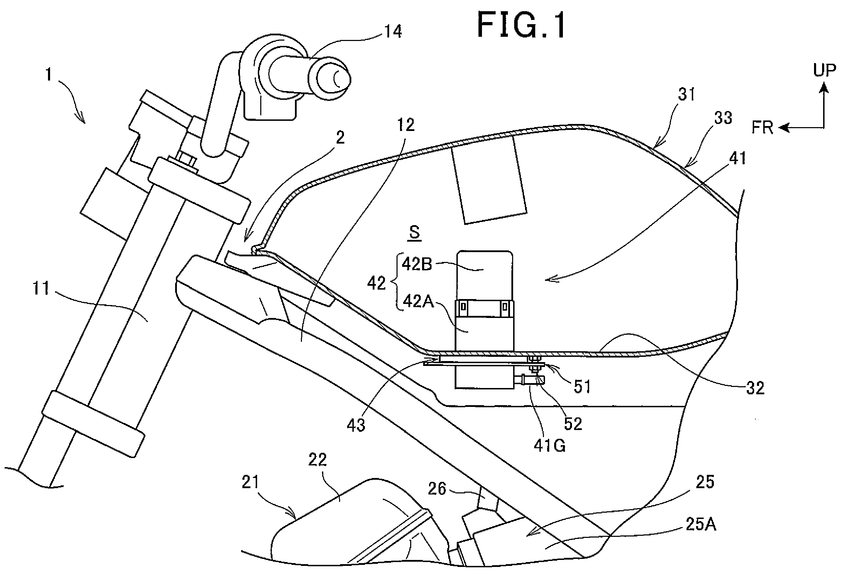

Fig. 1 shows the structure of a front portion of a two-wheeled motor vehicle to which the embodiment of the present invention is applied.

A vehicle body frame 2 of the two-wheeled motor vehicle is formed by bonding plural kinds of metal parts through welding or the like, and has a head pipe 11 and a pair of right and left main frames 12 extending from the head pipe 11 to the rear lower side. An engine 21 is supported at the rear lower side and at the lower side of the main frame 12, and a fuel tank 31 is supported at the rear side of the head pipe 11 and at the upper side of the main frame 12, that is, at the upper side of the engine 21.

The engine 21 is an engine in which a cylinder portion 22 erects frontwards and upwards from a crankcase (not shown), and an air-intake passage 25 is connected to the back surface of the cylinder portion 22. The air-intake passage 25 extends rearwards at the lower side of the fuel tank 31 and connects to an air cleaner (not shown). The air-intake passage 25 is provided with a throttle body 25A for adjusting the air-intake amount of the engine 21, and an injector (fuel injection valve) 26 for jetting fuel is mounted on the upper surface of the throttle body 25A.

The fuel pump 41 is connected to the injector 26 through a fuel pipe, and the fuel injector 26 is supplied with fuel pressurized by the fuel pump 41. That is, this two-wheeled motor vehicle 1 has the fuel pump 41 and the injector 26, and is configured as a fuel injection type so that the fuel in the fuel tank 31 is jetted into the engine 21.

The fuel tank 31 has a tank bottom plate 32 disposed in proximity to the upper surface of the main frame 12, and a tank outer wall 33 which covers the tank bottom plate 32 from the upper side thereof to form a fuel space S between the tank bottom plate 32 and the tank outer wall 33. The tank bottom plate 32 and the tank outer wall 33 are joined to each other by welding or the like to construct the fuel tank 31. The fuel tank 31 of this embodiment is formed of metal, but it may be formed of resin.

The fuel pump 41 is an in-tank type fuel pump which is secured to the fuel tank 31 as a fuel container of the two-wheeled motor vehicle 1. More specifically, the fuel pump 41 is secured to the tank bottom plate 32 of the fuel tank 31 and disposed at the upper side of an engine air-intake system containing the engine 21 and the injector 26. In Fig. 1, reference numeral 14 represents a steering handle joined to the upper portion of a head pipe 11.

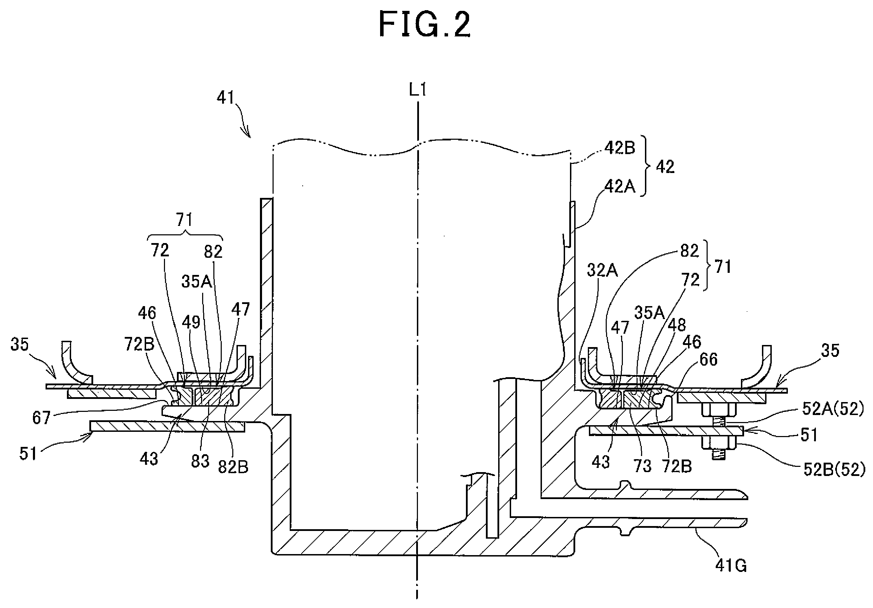

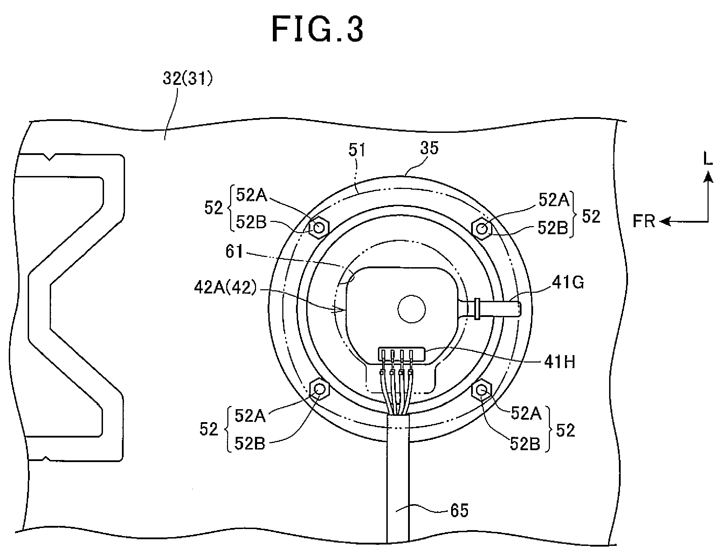

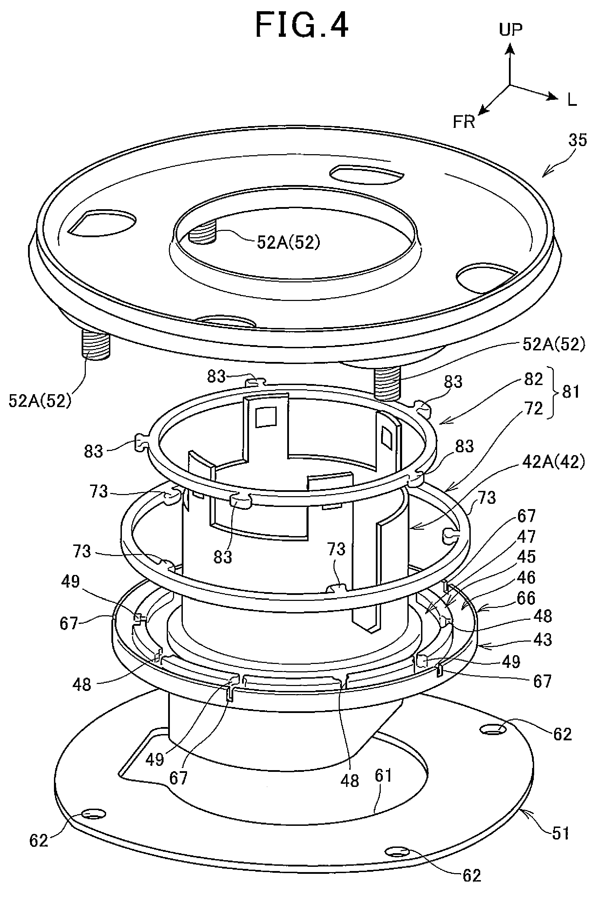

Fig. 2 is a side cross-sectional view showing the installation state of the fuel pump 41, Fig. 3 is a view of the fuel pump 41 which is taken from the lower side, and Fig. 4 is an exploded perspective view of a fixing structure of the fuel pump 41. In Fig. 2, reference character L1 represents the pump axis of the fuel pump 41.

As shown in Figs. 2 to 4, the fuel pump 41 has a pump unit 42 for feeding fuel into the fuel tank 31 under pressure, and a flange 43 which is configured to extend from the lower portion of the pump unit 42 and increase the diameter thereof in the peripheral direction. The pump unit 42 comprises a pump body 42A formed of resin , and a metal pump main body 42B (see Fig. 2) mounted in the pump body 42A.

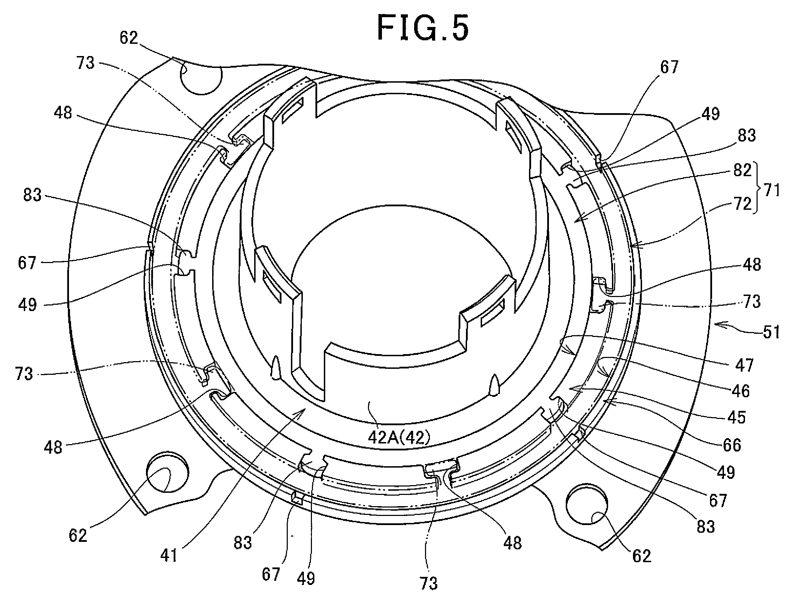

The tank bottom plate 32 of the fuel tank 31 is provided with a fuel pump insertion port 32A (see Fig. 2, Fig. 3) in which the fuel pump 41 is inserted, and an annular base portion 35 extending along the outer periphery of the fuel pump insertion port 32A is joined to the tank bottom plate 32 from the lower side thereof. The flange 43 of the fuel pump 41 is fitted to the base portion 35 from the lower side thereof, and under this state a plate 51 is fixed to the base portion 35 from the lower side of the flange 43 by a fastening member 52 (a fastening bolt 52a and a fastening nut 52B), so that the flange 43 is fixed to the fuel tank 31 by the pinching force between the press plate 51 and the base portion 35. In Fig. 5, reference numeral 61 represents an opening portion of the press plate 51 through which the fuel pump 41 passes, and reference numeral 62 represents a fastening hole portion through which the fastening member 52 (fastening bolt 52A) passes.

A flat portion 35A corresponding to the flange 43 in the fuel pump 41 is formed on the base portion 35. The flat portion 35A is shaped to be perpendicular to the axial line (coincident with the pump axis) L1 of the fuel pump insertion port 32A, and a double seal 71 is disposed between the flat portion 35A and the flange 43 of the fuel pump 41. Leakage of fuel (gasoline in this embodiment) existing inside and invasion of dust, dirt or the like existing outside (that is, out of the fuel tank 31) are intercepted by the double seal 71.

In Fig. 3, reference numeral 41G represents a fuel discharge port extending rearwards from the lower end portion of the fuel pump 41, and the fuel discharge port 41G is connected to the injector 26 through a fuel pipe (not shown), and supplies fuel discharged from the fuel discharge port 41G to the injector 26. In Fig. 3, reference numeral 41H represents a wire connection portion provided to the lower end of the fuel pump 41, and the wire connection portion 41H is electrically connected to an electronic control unit (not shown) through an electrical wire 65, and the operation of the fuel pump 41 is controlled under the control of the electronic control unit.

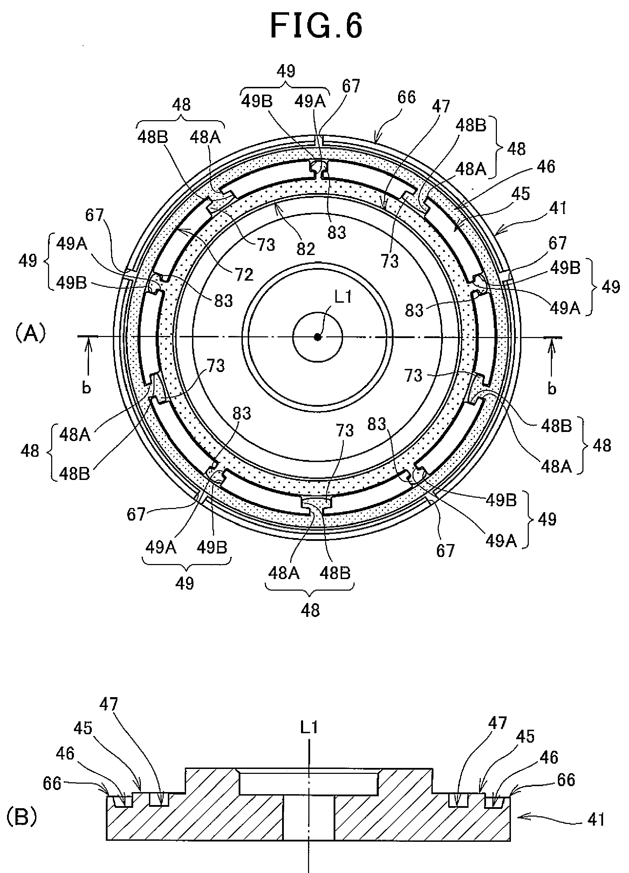

Fig. 5 is a perspective view showing a state that the double seal 71 is mounted on the flange 43 of the fuel pump 41, Fig. 6(A) is a plan view of the flange 43, and Fig. 6(B) is a cross-sectional view of b-b of Fig. 6(A).

As shown in Figs. 4 and 5, the double seal 71 has an outer seal 72 located outside and an inner seal 82 located inside. The respective seals 72 and 82 are configured as separate bodies, and formed of different raw materials. The respective seals 72 and 82 are represented by hatching in Fig. 6(A). As shown in Fig. 6(A), an annular projecting portion 45 is integrally provided to the upper surface of the flange 43 so as to upwards erect annularly around the pump axis L1, and an outer seal groove 46 in which the outer seal 72 is mounted is formed on an outer peripheral area of the upper surface of the flange 43 located outside the annular projecting portion 45, and an inner seal groove 47 in which the inner seal 82 is mounted is formed on an inner peripheral area of the upper surface of the flange 43 located inside the annular projecting portion 45.

In the annular projecting portion 45 are formed plural first slits (outer seal positioning portions) 48 in which outer seal inward projecting portions 73 projecting radially inwards from the outer seal 72 are fitted, and plural second slits (inner seal positioning portions ) 49 in which inner seal outward projecting portions 83 (see Fig. 5) projecting radially outwards from the inner seal 82 are fitted. The first slits 48 and the second slits 49 are alternately arranged at an equal angular interval of 36°, and every five slits are formed.

As shown in Fig. 6(A), under the state that the respective seals 72, 82 are mounted on the flange 43, a gap is formed over the whole periphery between the outer peripheral edge of the outer seal 72 and the outer peripheral edge of the outer seal groove 46 (corresponding to the inner peripheral edge of an outer peripheral wall 66 described later), and a gap is formed over the whole periphery between the inner peripheral edge of the inner seal 82 and the inner peripheral edge of the inner seal groove 47. Furthermore, a slight gap is formed between the outer seal inward projecting portion 73 of the outer seal 72 and the outer peripheral edge of the inner seal 82, and a slight gap is formed between the inner outward projecting portion 83 of the inner seal 82 and the inner peripheral edge of the outer seal 72.

Therefore, the respective seals 72, 82 containing the respective projecting portions 73, 83 can be easily mounted, and the dimensional precision of the respective seals 72, 82 and seal grooves 46, 47 can be alleviated.

In this construction, the outer seal 72 is positioned while brought into close contact with the inner peripheral edge of the outer seal groove 46 over the whole periphery thereof, and the inner seal 82 is positioned while brought into contact with the outer peripheral edge of the inner seal groove 47 over the whole periphery thereof. Accordingly, the relative positions of the respective seals 72, 82 are not varied, and the respective seals 72, 83 can be properly arranged.

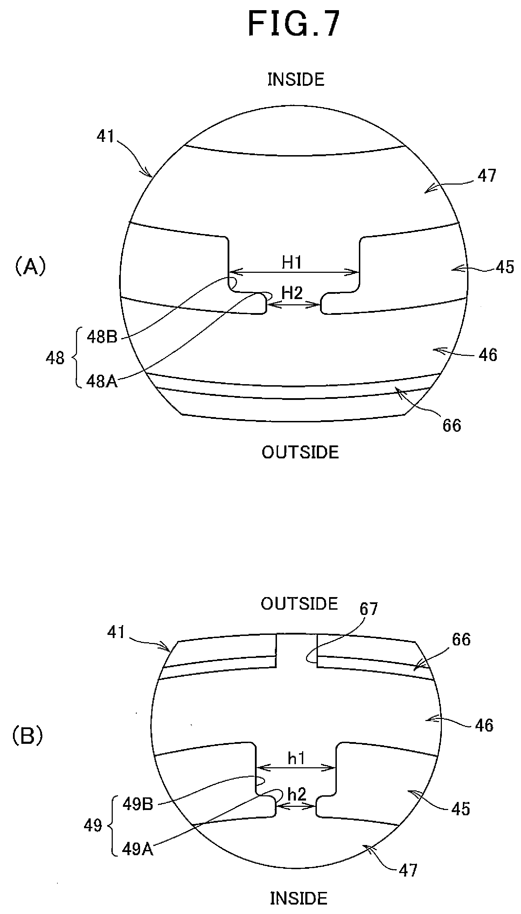

Fig. 7 (A) is a view of the first slit 48 which is taken from the upper side, and Fig. 7 (B) is a view of the second slit 49 which is taken from the upper side. In Fig. 7 (A) (B), the inside in the radial direction is referred to as "inside", and the outside in the radial direction is referred to as "outside".

As shown in Fig. 7(A), the first slit 48 is a slit penetrating through the annular projecting in the radial direction, and it is configured to have a slit portion having the smallest width (hereinafter referred to as narrow slit portion) 48A at the outside end in the radial direction and have a slit portion which is located inside the narrow slit portion 48A in the radial direction and has a constant width larger than the narrow slit portion 48A (hereinafter referred to as wide slit portion) 48B. The widths of the slits 48, 49 are defined as slit lengths along the peripheral direction of the annular projecting portion 45.

That is, the first slit 48 is configured to have a slit shape expanding inwards in the radial direction while forming an intercommunication path through which the outer seal groove 46 and the inner seal groove 47 intercommunicate with each other.

As shown in Fig. 7(B), the second slit 49 is a slit penetrating through the annular projecting portion 45 in the radial direction, and it is configured to have a slit portion having the smallest width (hereinafter referred to as narrow slit portion) 49A at the inside end in the radial direction and have a slit portion which is located inside the narrow slit portion 49A in the radial direction and has a constant width larger than the narrow slit portion 49A (hereinafter referred to as wide slit portion) 49B.

That is, the second slit 49 is shaped to expand in the opposite direction to the first slit 48, that is, formed in a slit-like shape expanding outwards in the radial direction while forming an intercommunication path through which the outer seal groove 46 and the inner seal groove 47 intercommunicate with each other.

As shown in Figs. 6 and Fig. 7(A) (B), the second slit 49 is formed to be narrower (shorter in length in the peripheral direction) than the first slit 48. More specifically, the maximum width of the second slit 49 (the width h1 of the wide slit portion 49B) is smaller than the maximum width of the first slit 48 ( the width H1 of the wide slit portion 48B) and larger than the minimum width of the first slit 48 (the width H2 of the narrow slit portion 48A). Furthermore, the minimum width of the second slit 49 (the width h2 of the narrow slit portion 49A) is smaller than the minimum width of the first slit 48 (the width H2 of the narrow slit portion 48A).

Furthermore, the lengths in the radial direction (the projection lengths) of the outer seal inward projecting portion 73 and the inner seal outward projecting portion 83 which are respectively fitted in the slits 48 and 49 are equal to the respective lengths in the radial direction of the slits 48 and 49, that is, the length in the radial direction (projection length) of the annular projecting portion 45 (for example, 3mm).

The first slit 48 and the second slit 49 are formed to be different from each other in width, and both the slits 48, 49 and the respective projecting portions 73, 83 are set to be equal to one another in length as described above. Accordingly, even when the outer seal inward projecting portion 73 to be fitted in the first slit 48 is erroneously tried to be put in the second slit 49, the outer seal inward projecting portion 73 cannot be fitted in the second slit 49 (both the narrow slit portion 49A and the wide slit portion 49B). Furthermore, even when the inner seal outward projecting portion 83 to be fitted in the second slit 49 is erroneously tried to be put in the first slit 48, it cannot be fitted in the first slit 48 (the narrow slit portion 48A). That is, erroneous assembling of the respective projecting portions 73 and 83 of the outer seal 72 and the inner seal 82 can be prevented.

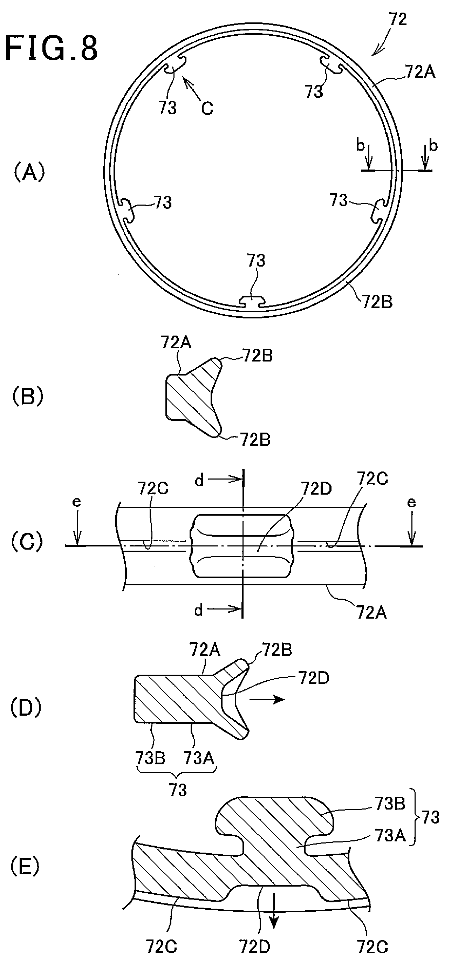

Fig. 8 shows the outer seal 72, and more specifically, Fig. 8 (A) is a plan view of the outer seal 72, Fig. 8(B) is a cross-sectional view of b-b of Fig. 8(A), Fig. 8(C) is a view taken in a direction of an arrow C, Fig. 8(D) is a cross-sectional view of d-d of Fig. 8(C), and Fig. 8(E) is a cross-sectional view of e-e of Fig. 8(C).

The raw material of the outer seal 72 is nitrile rubber or polyvinyl chloride as a seal material (elastic raw material) which is suitable to prevent invasion of dust such as dirt, dust or the like. Additive such as plasticizer or the like or another material may be contained to the extent that the outer seal can keep sufficient performance as dust seal.

The outer seal 72 is integrally provided with an annular outer seal main body portion 72A and plural (five in this embodiment) outer seal inward projecting portions 73 which are spaced from one another at intervals in the peripheral direction of the outer seal main body portion 72A while projecting inwards in the radial direction, and the outer seal inward projecting portions 73 are provided to be arranged at an equal angular interval (72° interval).

The outer seal main body portion 72A is formed to have a V-shaped cross-section in side cross-sectional view, and has a lip portion 72B which protrude in an up-and-down and outward direction in the radial direction at the outermost periphery edge, and an annular first recess portion 72C at the outer peripheral edge. The first recess portion 72C is endlessly continuous along the outer periphery so that the lip portion 72B easily sags.

Furthermore, a second recess portion 72D which is larger in width (in the length along the up-and-down direction (thickness direction) of the outer seal 72) and deeper in depth (in the length along the radial direction of the outer seal 72) than the first recess portion 72C is formed at the place corresponding to the first recess portion 72C on the outer periphery of the outer seal main body 72A which confronts the outer seal inward projecting portion 73. The lip portion 72B at which the second recess portion 72D is located is partially made thinner by the second recess portion 72D than the other lip portions 72B, whereby the elastic deformation function is weakened, whereby air stocked in the outer seal groove 46 is compressed by elastic deformation of the outer seal 72, so that the air can be released to the outside in the radial direction as indicated by arrows in Figs.8(D) (E).

As shown in Fig. 5 and Fig. 7(B), the annular outer peripheral wall 66 is provided to the flange 43 of the fuel pump 41 so as to erect from the outer periphery of the outer seal groove 46, and the inner and outer intercommunication grooves 67 (see Fig. 5) are formed in the outer peripheral wall 66 so as to be spaced from one another, so that the exhausted air is passed through the inner and outer intercommunication grooves 67, etc. and exhausted to the outside.

Accordingly, the recess portions comprising the outer seal groove 46 and the inner seal groove 47 are set to a pressure-reduced state, and serve as suckers, so that a seal effect can be enhanced. Furthermore, the outer seal main body portion 72A has a V-shaped cross-section, and thus it also functions as a check valve for preventing invasion of dust, etc. from the outside. The inner and outer intercommunication grooves 67 also function as outer seal check grooves for checking it from the outside whether the outer seal 72 is mounted therein.

As shown in Fig. 8(A) (E), the outer seal inward projecting portion 73 integrally has a base end portion 73A extending inwards in the radial direction from the outer seal main body portion 72A and a tip portion 73B extending inwards in the radial direction from the base end portion 73B, and the tip portion 73B is formed to be longer than the base end portion 73A in the peripheral direction of the outer seal 72. That is, the outer seal inward projecting portion 73 has a projecting shape expanding inwards in the radial direction.

The width of the base end portion 73A is set to be substantially equal to the minimum width of the first slit 48 (the width H2 of the narrow slit portion 48A (see Fig. 7(A)), and the width of the tip portion 73B is set to be substantially equal to the maximum width of the first slit 48 (the width H1 of the wide slit portion 48B (see Fig. 7(A)). When the outer seal 72 is inserted in the outer seal groove 46, the base portion 73A is fitted in the narrow slit portion 48A of the first slit 48, and the tip portion 73B is fitted in the wide slit portion 48B, whereby the outer seal 72 can be positioned so that it cannot rotate in the peripheral direction.

Here, in this embodiment, the width of the base portion 73A (3.0mm, for example) is set to be slightly larger than the width of the narrow slit portion 48a (2.5mm, for example), and the width of the tip portion 73B is set to be equal to the width of the wide slit portion 48B (6.0mm, for example). According to this dimension setting, the base portion 73A is fitted in the first slit 48 while elastically deformed, so that the outer seal 72 can be more surely prevented from being positionally displaced. Furthermore, the tip portion 73B is mounted in the first slit 48 while not elastically deformed, so that the tip portion 73B can be easily mounted into and demounted from the first slit 48.

As shown in Fig. 8 (D) (E), the tip portion 73B and the base portion 73A of the outer seal inward projecting portion 73 are set to be equal to each other in length (thickness) in the up-and-down direction, and do not project in the up-and-down direction with respect to the lip portion 72B. Therefore, air flow from the inner seal groove 47 located on the inner periphery is not disturbed by the outer seal inward projecting portion 73, and air can be smoothly exhausted.

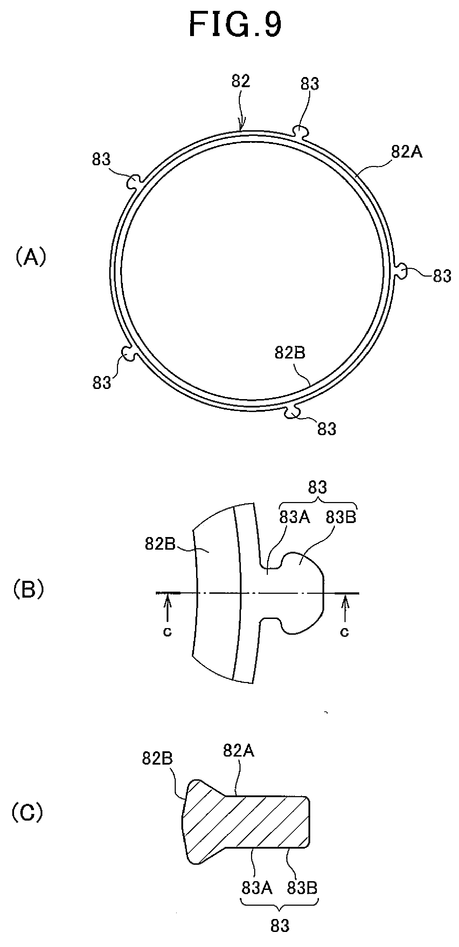

Fig. 9 shows the inner seal 82, and more specifically, Fig. 9(A) is a plan view showing the inner seal 82, Fig. 9(B) is a plan view showing the inner seal outward projecting portion 83, and Fig. 9(C) is a cross-sectional view of c-c of Fig. 9(B).

The raw material of the inner seal 82 is fluoro-rubber (elastic member) suitable for sealing of fuel. The fluoro-rubber contains fluorine resin or copolymer of fluorine resin. Material other than fluoro-rubber may be contained to the extent that sufficient performance can be kept as fuel seal.

The inner seal 82 integrally has an annular inner seal main body portion 82A whose diameter is smaller than the outer seal 72, and plural (five in this embodiment) inner seal outward projecting portions 83 which project outwards in the radial direction so as to be spaced from one another in the peripheral direction of the inner seal main body portion 82A, and the inner seal outward projecting portions 83 are arranged at an equal interval (an interval of 72° in this embodiment).

The inner seal main body portion 82A is formed to have a sectorial cross-section in side cross-sectional view, and has a swollen portion 82B swelling in the up-and-down direction at the innermost peripheral end (see Fig. 8(C)). A lip structure which is the same as or near to the lip portion 72B of the outer seal 72 may be provided in place of the swollen portion 82B.

As shown in Fig. 9(B), the inner seal outward projecting portion 83 integrally has a base portion 83A extending outwards in the radial direction from the inner seal main body portion 82A, and a tip portion 83B extending outwards in the radial direction from the base portion 83A, and the tip portion 83B is formed to be longer in the peripheral direction of the inner seal 82 than the base portion 83A. That is, the inner seal outward projecting portion 83 is formed in a projecting shape expanding outwards in the radial direction.

The width of the base portion 83A is set to be substantially equal to the minimum width of the second slit 49 (the width h2 of the narrow slit portion 49A (see Fig. 7(B)), and the width of the tip portion 83B is set to be substantially equal to the maximum width of the second slit 49 (the width h1 of the wide slit portion 49B (see Fig. 7(B)). When the inner seal 82 is inserted in the inner seal groove 47, the base portion 83A is fitted in the narrow slit portion 49A of the second slit 49, and the tip portion 83B is fitted in the wide slit portion 49B of the second slit 49, whereby the inner seal 82 can be positioned so that it cannot rotate in the peripheral direction.

Here, in this embodiment, as in the case of the outer seal inward projecting portion 73, the width of the base portion 83A (2.5mm, for example) is set to be slightly larger than the width of the narrow slit portion 49A (2.0mm, for example) and the width of the tip portion 83B is set to be equal to the width of the wide slit portion 49B (4.0mm, for example) in the inner seal outward projecting portion 83. Accordingly, when the projecting portion 83 is fitted in the second slit 49, the base portion 83A of the projecting portion 83 is more pinched by the second slit 49 than the tip portion 83B, so that the positional displacement of the inner seal 82 can be more surely prevented, and the tip portion 83B can be easily put into and removed from the second slit 49.

Furthermore, as shown in Fig. 9(C), the tip portion 83B and the base portion 83A of the inner seal outward projecting portion 83 are equal to each other in length (thickness) in the up-and-down direction, and the do not protrude in the up-and-down direction with respect to the swollen portion 82B. Therefore, air flow from the inner peripheral side to the outer peripheral side (the outer seal groove 46 side) is not disturbed, and can be smoothly exhausted.

Next, assembling of the fuel pump 41 will be described.

As shown in Fig. 5, the outer seal 72 and the inner seal 82 are respectively fitted in the outer seal groove 46 and the inner seal groove 47 of the flange 43 of the fuel pump 41. In this case, the outer seal 72 and the inner seal 82 are not overlapped with each other in the up-and-down direction, and the respective seals 72 and 82 can be mounted in any order. Furthermore, the outer seal inward projecting portions 73 of the outer seal 72 are fitted in the first slits 48, and the inner seal outward projecting portions 83 of the inner seal 82 are fitted in the second slits 49, so that the respective seals 72 and 82 are positioned while restricted from rotating.

Furthermore, the outer seal inward projecting portions 73 of the outer seal 72 are formed to be larger in the peripheral direction than the second slits 49, and thus they cannot be put in the second slits 49, so that erroneous assembling can be prevented. The respective seals 72 and 82 can be positioned and easily mounted in the flange 43 without being erroneously assembled.

In this case, as shown in Fig. 5, the outer seal inward projecting portions 73 and the inner seal outward projecting portions 834 are located within the same width in the radial direction. Therefore, the respective projecting portions 73, 83 can be arranged by effectively using the annular projecting portion 45 between the outer seal 72 and the inner seal 82, and the arrangement area of the double seal 71 can be made small with preventing erroneous assembling of the seals 72, 82 and securing the positioning function.

Subsequently, the flange 43 of the fuel pump 41 is applied to the base portion 35 secured to the tank bottom plate 32 from the lower side of the fuel tank 31, and the press plate 51 is fastened to the base portion 35 from the lower side of the flange by the fastening member 52, whereby the flange 43 is fixed to the fuel tank 31 by the pinching force between the press plate 51 and the base portion 35. As a result, the fuel pump 41 is assembled to the fuel tank 31.

As described above, in this embodiment, the double seal 71 provided between the fuel pump insertion port 32A and the flange 43 of the fuel pump 41 comprises the outer seal 72 and the inner seal 82 which are provided as separate bodies. Therefore, the raw materials of both the seals 72, 82 can be easily and individually set. Therefore, the raw materials of the respective seals 72, 82 may be individually set in connection with targets to be sealed (the outer seal 72 is mainly used for dust, etc. and the inner seal 82 is mainly used for fuel), and thus it is unnecessary to use a raw material which covers both dust and fuel. Accordingly, the degree of freedom of selecting the raw materials is increased, so that the cost of the raw materials can be reduced and thus the cost of parts can be reduced.

In addition, according to this embodiment, the outer seal 72 is provided with the outer seal inward projecting portions 73 projecting inwards in the radial direction, the inner seal 82 is provided with the inner seal outward projecting portions 83 projecting outwards in the radial direction, the flange 43 of the fuel pump 41 is provided with the first slits 48 and the second slits 49 serving as the positioning portions in which the outer seal inward projecting portions 73 and the inner seal outward projecting portions 83 are fitted, and the outer seal inward projecting portions 73 and the inner seal outward projecting portions 83 are alternately arranged along the peripheral direction of the seals and located within the same width in the radial direction. Therefore, even in the double seal in which the outer seal 72 and the inner seal 82 are provided as separate bodies, the assembling performance of the respective seals 72 and 82 can be made excellent, and the arrangement area of the double seal can be made compact. since the arrangement area of the double seal 71 is made small, the flat portion which is required to be set in the fuel tank 31 can be made compact.

When the arrangement area of the double seal 71 can be made small as described above, the setting of the mating face (flat face) between the fuel pump 41 and the fuel tank 31 can be reduced, and the degree of freedom of the arrangement of the fuel pump 41 can be enhanced, and the fuel pump 41 can be easily arranged.

As described above, in this embodiment, the cost of the parts can be reduced, the assembling performance of the outer seal 72 and the inner seal 82 can be excellent, both the seals 72, 82 can be compactly arranged and the fuel pump 41 can be easily arranged.

The outer seal inward projecting portions 73 and the inner seal outward projecting portions 83 can be used as grip portions to be gripped by worker's fingers when the respective seals 72 and 82 are mounted. Therefore, the work for mounting and demounting the respective seals 72, 82, containing a work for fitting the respective projecting portions 73, 83, can be easily performed.

Particularly, in this construction, when the respective projecting portions 73, 83 are fitted in the respective slits 48, 49, the base end portions 73A of the outer seal inward projecting portions 73 are more pinched by the first slits 48 than the tip portions 73B at the inside end in the radial direction, and the base end portions 83A of the inner seal outward projecting portions 83 are more pinched by the tip portions 83B at the outside end in the radial direction. Therefore, the tip portions 73B, 83B of the respective projecting portions 73, 83 can be easily put into and removed from the respective slits while the positional displacement of the respective seals 72, 82 is surely prevented by the base portions 73A, 83A of the respective projecting portions 73, 83, so that the work of mounting and demounting the respective seals 72, 82 can be easily performed.

Furthermore, in this embodiment, the first slits (first positioning portions) 48 in which the outer seal inward projecting portions 73 are fitted radially penetrate through the annular projecting portion 45 which is erectly provided to the flange 43 between the respective seals 72, 82, and are formed in the outer seal slits expanding inwards in the radial direction. Therefore, the outer seal inward projecting portions 73 can be approached to the inner seal 82 as closely as possible. Therefore, the outer shape of the outer seal 72 can be made small, and the size in the radial direction of the double seal 71 can be made as small as possible.

Furthermore, the second slits (second positioning portions) 49 in which the inner seal outward projecting portions 83 are fitted radially penetrate through the annular projecting portion 45 of the flange 43, and are formed in the inner seal slits expanding outwards in the radial direction. Therefore, the inner seal outward projecting portions 83 can be approached to the outer seal 72 as closely as possible. Therefore, the outer shape of the inner seal 82 can be made large, and the size in the radial direction of the double seal 71 can be made as small as possible.

Furthermore, the raw material of the outer seal 72 contains nitrile rubber or polyvinyl chloride, and the raw material of the inner seal 82 contains fluoro-rubber. Therefore, the outer seal 72 can efficiently function as a dust seal, and the inner seal 82 can efficiently function as a fuel seal. Accordingly, these seals can be used as optimum seals suitable for their locations.

Furthermore, the outer seal 72 is provided with the annular first recess portion 72 having the V-shaped cross-section on the outer periphery thereof, and the second recess portion 72D which is wider and deeper than the first recess portion 72C is formed on the outer periphery so as to confront the outer seal inward projecting portion 73. Therefore, air between the seals of the double seal 71 can be easily released, and irregular deformation of the seal 71 caused by increase of inner pressure and increase of reaction force which a counterpart (the base portion 35 of the fuel tank 31) suffers can be prevented. In addition, the second recess portions 72D are easily deformed because they are formed to be wide and deep. However, the second recess portions 72D are provided on the outer periphery so as to confront the outer seal inward projecting portions 73, so that the second recess portions 72D can be properly suppressed from being deformed to expand in the radial direction of the second recess portions 72D when the outer seal inward projecting portions 73 are fitted in the first slits 48.

The embodiment described above is merely an embodiment of the present invention, and any modification an application can be performed without departing from the subject matter of the present invention.

For example, in the above embodiment, the double seal 71 is secured to the flange 43 of the fuel pump 41. However, the double seal 71 may be arranged merely between the flange 43 of the fuel pump 41 and the fuel pump insertion port 32A. Under this condition, the double seal 71 may be secured to the fuel tank 31 side (for example, the base portion 35). In this case, with respect to the positioning portions (the respective slits 48, 49) in which the projecting portions 73, 83 of the respective seals 72, 82 are fitted, the positioning portions may be provided not at the fuel pump side, but at the fuel tank 31 side (for example, the base portion 35).

Furthermore, the shapes and locating positions of the respective projecting portions 73, 83 and the respective slits 48, 49 may be changed to the extent that the respective projecting portions 73, 83 are located within the same width in the radial direction of the seals.

Furthermore, in this embodiment, the seal structure of the present invention is applied to the structure that the fuel pump 41 is secured to the tank bottom plate 32 of the fuel tank 31. However, the present invention is not limited to this embodiment, and the seal structure of the present invention may be applied to the structure that the fuel pump 41 is secured to the top plate of the fuel tank 31. The structure that the fuel pump 41 is secured to the top plate of the fuel tank 31 is applied to a scooter type vehicle or the like, that is, the seal structure of the present invention is also applicable to a scooter type two-wheeled motor vehicle.

Furthermore, in this embodiment, the present invention is applied to the seal structure of the fuel pump 41 of the two-wheeled motor vehicle shown in Fig. 1, etc. However, the present invention is not limited to this embodiment, and the present invention may be broadly applied to the seal structure of the fuel pump 41 fixed to the fuel tank 31. For example, the present invention may be applied to various straddle type vehicles, etc. The straddle type vehicle contains a general vehicle on which a driver rides with straddling over the vehicle body and it contains not only two-wheeled motor vehicles (containing a motorized bicycle), but also three-wheeled vehicles classified as all-terrain vehicles and four-wheeled vehicles.

### Description of Reference Numerals

- 1: two-wheeled motor vehicle (straddle type vehicle)
- 2: vehicle body frame
- 31: fuel tank
- 32A: fuel pump insertion port
- 41: fuel pump
- 45: annular projecting portion
- 46: outer seal groove
- 47: inner seal groove
- 48: first slit (positioning portion for outer seal)
- 49: second slit (positioning portion for inner seal)
- 71: double seal
- 72: outer seal
- 72C: first recess portion
- 72D: second recess portion
- 73: outer seal inward projecting portion
- 73A, 83A: base portion
- 73B, 83B: tip portion
- 82: inner seal
- 83: inner seal outward projecting portion

## Claims

1. A seal structure for a fuel pump in which a fuel pump insertion port (32A) is formed in a fuel tank (31) for stocking fuel, and an annular double seal (71) is disposed between the fuel pump insertion port (32A) and a flange (43) provided to the fuel pump (41), **characterized in that** the double seal (71) has an outer seal (72) and an inner seal (82) which are configured as separate bodies, the outer seal (72) is provided with outer seal inward projecting portions (73) projecting inwards in a radial direction thereof, the inner seal (82) is provided with inner seal outward projecting portions (83) projecting outwards in the radial direction, any one of the fuel pump (41) and the fuel tank (31) is provided with positioning portions (48, 49) in which the outer seal inward projecting portions (73) and the inner seal outward projecting portions (83) are fitted, and the outer seal inward projecting portions (73) and the inner seal outward projecting portions (83) are alternately arranged along a peripheral direction of the seals and located within the same width in the radial direction.

2. The seal structure for the fuel pump according to claim 1, wherein each of the positioning portions (48) in which the outer seal inward projecting portions (73) are fitted radially penetrates through an annular projecting portion (45) that is erectly provided to the flange (43) between the outer seal (72) and the inner seal (82), and comprises a narrow slit portion (48A) at the outside in the radial direction and a wide slit portion (48B) which is located inside of the narrow slit portion (48A) in the radial direction and is wider than the narrow slit portion (48A).

3. The seal structure for the fuel pump according to claim 2, wherein each of the positioning portions (49) in which the inner seal outward projecting portions (83) are fitted radially penetrates through the annular projecting portion (45) that is erectly provided to the flange (43) between the outer seal (72) and the inner seal (82), and comprises a narrow slit portion (49A) at the inside in the radial direction and a wide slit portion (49B) which is located outside of the narrow slit portion (49A) in the radial direction and is wider than the narrow slit portion (49A).

4. The seal structure for the fuel pump according to any one of claims 1 to 3, wherein when the outer seal inward projecting portions (73) are fitted in the positioning portions (48), base portions (73A) of the outer seal inward projecting portions (73) are more pinched by the positioning portions (48) than tip portions (73B) thereof at the inside end in the radial direction, and when the inner seal outward projecting portions (83) are fitted in the positioning portions (49), the base portions (83A) of the inner seal outward projecting portions (83) are more pinched by the positioning portions (49) than tip portions (83B) at the outside end in the radial direction.

5. The seal structure for the fuel pump according to any one of claims 1 to 4, wherein a raw material of the outer seal (72) contains nitrile rubber or polyvinyl chloride, and a raw material of the inner seal (82) contains fluoro-rubber.

6. The seal structure for the fuel pump according to any one of claims 1 to 5, wherein the outer seal (72) has an annular first recess portion (72C) having a V-shaped cross-section formed on the outer periphery thereof, and a second recess portion (72D) which is wider and deeper than the first recess portion (72C) and formed on the outer periphery thereof so as to confront each of the outer seal inward projecting portions (73).

7. The seal structure for the fuel pump according to any one of claims 1 to 6, wherein the positioning portion (48) in which the outer seal inward projecting portion (73) is fitted and the positioning portion (49) in which the inner outward projecting portion (83) is fitted are formed to be different in width, and both the positioning portions (48, 49) and the respective projecting portions (73, 83) are configured to be equal in length.

## Patentansprüche

1. Dichtungsanordnung für eine Kraftstoffpumpe, bei der eine Kraftstoffpumpeneinsetzöffnung (32A) in einem Kraftstofftank zum Bevorraten von Kraftstoff ausgebildet ist und eine ringförmige Doppeldichtung (71) zwischen der Kraftstoffpumpeneinsetzöffnung (32A) und einem Flansch (43) angeordnet ist, der an der Kraftstoffpumpe (41) vorgesehen ist, **dadurch gekennzeichnet, dass** die Doppeldichtung (71) eine äußere Dichtung (72) und eine innere Dichtung (82) hat, die als separate Körper eingerichtet sind, die äußere Dichtung (72) mit einwärts vorstehenden Abschnitten der äußeren Dichtung (73) versehen sind, die in einer radialen Richtung einwärts vorstehen, die innere Dichtung (82) mit auswärts vorstehenden Abschnitten (83) der inneren Dichtung versehen sind, die in der radialen Richtung auswärts vorstehen, die Kraftstoffpumpe (41) oder der Kraftstofftank (31) mit Positionierabschnitten (48, 49) versehen sind, in die die einwärts vorstehenden Abschnitte (73) der äußeren Dichtung und die auswärts vorstehenden Abschnitte (43) der inneren Dichtung eingepasst sind und die einwärts vorstehenden Abschnitte (73) der äußeren Dichtung und die auswärts vorstehenden Abschnitte (83) der inneren Dichtung entlang einer Umfangsrichtung der Dichtungen abwechselnd angeordnet sind und innerhalb derselben Breite in der radialen Richtung angeordnet sind.

2. Dichtungsanordnung für die Kraftstoffpumpe gemäß Anspruch 1, wobei jeder der Positionierabschnitte (48), in die die einwärts vorstehenden Abschnitte (73) der äußeren Dichtung eingepasst sind, einen ringförmigen vorstehenden Abschnitt (45) radial durchdringen, der an dem Flansch (43) zwischen der äußeren Dichtung (72) und der inneren Dichtung (82) aufgerichtet vorgesehen ist, und einen schmalen Schlitzabschnitt (48A) an der Außenseite in der radialen Richtung und einen weiten Schlitzabschnitt (48B), der innerhalb des schmalen Schlitzabschnitts (48A) in der radialen Richtung angeordnet ist umfasst und der breiter ist als der schmale Schlitzabschnitt (48A).

3. Dichtungsanordnung für eine Kraftstoffpumpe gemäß Anspruch 2, wobei jeder der Positionierabschnitte (49), in denen die auswärts vorstehenden Abschnitte (83) der inneren Dichtung eingepasst sind, den ringförmig vorstehenden Abschnitt (45) radial durchdringen, der an den Flansch (43) zwischen der äußeren Dichtung (72) und der inneren Dichtung (82) aufrecht vorgesehen ist, und einen schmalen Schlitz (49A) auf der Innenseite in radialer Richtung und einen breiten Schlitzabschnitt (49B) umfasst, der außerhalb des schmalen Schlitzabschnitts (49A) in der radialen Richtung angeordnet ist und der breiter ist als der schmale Schlitzabschnitt (49A).

4. Dichtungsanordnung für die Kraftstoffpumpe gemäß irgendeinem der Ansprüche 1 bis 3, wobei, wenn die einwärts vorstehenden Abschnitte (73) der äußeren Dichtung in die Positionierabschnitten (48) eingepasst sind, Basisabschnitte (43A) der einwärts vorstehenden Abschnitte der äußeren Dichtung (73) mehr durch die Positionsabschnitte (48) gequetscht werden als Spitzenabschnitte (73B) an dem inneren Ende in der radialen Richtung und wenn die auswärts vorstehenden Abschnitte (83) der inneren Dichtung in die Positionierabschnitte (49) eingepasst sind, die Basisabschnitte (83A) der äußeren vorstehenden Abschnitte (83) der inneren Dichtung mehr gequetscht sind als durch die Positionierabschnitte (49) als Spitzenabschnitte (83) an dem äußeren Ende in der radialen Richtung.

5. Dichtungsanordnung für die Kraftstoffpumpe gemäß einem der Ansprüche 1 bis 4, wobei ein Rohmaterial der äußeren Dichtung (72) Nitrilkautschuk oder Polyvinylchlorid enthält und ein Rohmaterial der inneren Dichtung Fluorkautschuk enthält.

6. Dichtungsanordnung für die Kraftstoffpumpe gemäß irgendeinem der Ansprüche 1 bis 5, wobei die äußere Dichtung (72) einen ringförmigen, ersten Ausschnittbereich (72C) hat, der einen V-förmigen Querschnitt hat, der an seinem äußeren Umfang ausgebildet ist, und einen zweiten Ausschnittbereich (72D) hat, der breiter ist und tiefer als der erste Ausschnittbereich (72C) und der an seinem äußeren Umfang ausgebildet ist, um jeden der einwärts vorstehenden Abschnitte (73) der äußeren Dichtung gegenüberzuliegen.

7. Dichtungsanordnung für die Kraftstoffpumpe gemäß einem der Ansprüche 1 bis 6, wobei der Positioniersabschnitt (48), in den der einwärts vorstehende Abschnitt (73) der äußeren Dichtung eingepasst ist, und der Positioniersabschnitt (49), in den der auswärts vorstehende Abschnitt (83) eingepasst ist, mit verschiedener Breite ausgebildet sind und beide Positioniersabschnitte (48, 49) und die entsprechenden vorstehenden Abschnitte (73, 83) mit gleicher Länger ausgebildet sind.

## Revendications

1. Structure de joint d'étanchéité pour une pompe à carburant, dans laquelle un orifice d'insertion de pompe à carburant (32A) est formé dans un réservoir de carburant (31) pour stocker du carburant, et un double joint d'étanchéité annulaire (71) est disposé entre l'orifice d'insertion de pompe à carburant (32A) et une bride (43) prévue sur la pompe à carburant (41), **caractérisée en ce que** le double joint d'étanchéité (71) a un joint d'étanchéité externe (72) et un joint d'étanchéité interne (82) qui sont configurés comme des corps séparés, le joint d'étanchéité externe (72) est prévu avec des parties faisant saillie vers l'intérieur de joint d'étanchéité externe (73) faisant saillie vers l'intérieur dans sa direction radiale, le joint d'étanchéité interne (82) est prévu avec des parties en saillie vers l'extérieur de joint d'étanchéité interne (83) faisant saillie vers l'extérieur dans la direction radiale, l'un quelconque parmi la pompe à carburant (41) et le réservoir de carburant (31) est prévu avec des parties de positionnement (48, 49) dans lesquelles les parties en saillie vers l'intérieur de joint d'étanchéité externe (73) et les parties en saillie vers l'extérieur de joint d'étanchéité interne (83) sont montées, et les parties en saillie vers l'intérieur de joint d'étanchéité externe (73) et les parties en saillie vers l'extérieur de joint d'étanchéité interne (83) sont agencées de manière alternée le long d'une direction périphérique des joints d'étanchéité et positionnées à l'intérieur de la même largeur dans la direction radiale.

2. Structure de joint d'étanchéité pour une pompe à carburant selon la revendication 1, dans laquelle chacune des parties de positionnement (48) dans lesquelles les parties en saillie vers l'intérieur de joint d'étanchéité externe (73) sont montées radialement, pénètre à travers une partie en saillie annulaire (45) qui est prévue droite sur la bride (43) entre le joint d'étanchéité externe (72) et le joint d'étanchéité interne (82), et comprend une partie de fente étroite (48A) à l'extérieur dans la direction radiale et une partie de fente large (48B) qui est positionnée à l'intérieur de la partie de fente étroite (48A) dans la direction radiale et qui est plus large que la partie de fente étroite (48A).

3. Structure de joint d'étanchéité pour une pompe à carburant selon la revendication 2, dans laquelle chacune des parties de positionnement (49) dans lesquelles les parties en saillie vers l'extérieur de joint d'étanchéité interne (83) sont montées radialement, pénètre à travers la partie en saillie annulaire (45) qui est prévue droite sur la bride (43) entre le joint d'étanchéité externe (72) et le joint d'étanchéité interne (82) et comprend une partie de fente étroite (49A) à l'intérieur dans la direction radiale et une partie de fente large (49B) qui est positionnée à l'extérieur de la partie de fente étroite (49A) dans la direction radiale et est plus large que la partie de fente étroite (49A).

4. Structure de joint d'étanchéité pour une pompe à carburant selon l'une quelconque des revendications 1 à 3, dans laquelle lorsque les parties en saillie vers l'intérieur de joint d'étanchéité externe (73) sont montées dans les parties de positionnement (48), les parties de base (73A) des parties en saillie vers l'intérieur de joint d'étanchéité externe (73) sont davantage pincées par les parties de positionnement (48) que leurs parties de pointe (73B) au niveau de l'extrémité intérieure dans la direction radiale, et lorsque les parties en saillie vers l'extérieur de joint d'étanchéité interne (83) sont montées dans les parties de positionnement (49), les parties de base (83A) des parties faisant saillie vers l'extérieur de joint d'étanchéité interne (83) sont davantage pincées par les parties de positionnement (49) que les parties de pointe (83B) au niveau de l'extrémité extérieure dans la direction radiale.

5. Structure de joint d'étanchéité pour une pompe à carburant selon l'une quelconque des revendications 1 à 4, dans laquelle une matière première du joint d'étanchéité externe (72) contient du caoutchouc nitrile ou du polychlorure de vinyle, et une matière première du joint d'étanchéité interne (82) comprend du caoutchouc fluoré.

6. Structure de joint d'étanchéité pour une pompe à carburant selon l'une quelconque des revendications 1 à 5, dans laquelle le joint d'étanchéité externe (72) a une première partie d'évidement annulaire (72C) ayant une section transversale en forme de V formée sur sa périphérie externe, et une seconde partie d'évidement (72D) qui est plus large et plus profonde que la première partie d'évidement (72C) et formée sur sa périphérie externe afin de faire face à chacune des parties en saillie vers l'intérieur de joint d'étanchéité externe (73).

7. Structure de joint d'étanchéité pour une pompe à carburant selon l'une quelconque des revendications 1 à 6, dans laquelle la partie de positionnement (48) dans laquelle la partie en saillie vers l'intérieur de joint d'étanchéité externe (73) est montée et la partie de positionnement (49) dans laquelle la partie en saillie vers l'extérieur de joint d'étanchéité interne (83) est montée, sont formées pour être différentes en largeur, et à la fois les parties de positionnement (48, 49) et les parties en saillie (73, 83) sont respectivement configurées pour être égales en longueur.
